# EUROPEAN PATENT APPLICATION

(11) **EP 4 545 507 A1**
(43) Date of publication of application: **30.04.2025**
(21) Application number: 23206153.1
(22) Date of filing: 26.10.2023
(51) Int. Cl.: C05C 9/00, B01J 2/00, C05G 5/12, B01J 2/02

(54) **PRILLING TOWER AND METHOD FOR PRODUCING UREA-BASED PRILLS**

(71) Applicant: Yara International ASA, 0277 Oslo (NO)
(72) Inventor: Shekhar Kumar, Chandra, 243201 Uttar Pradesh (IN); Sankhyadhar, Maneesh, 243201 Uttar Pradesh (IN)
(74) Representative: AWA Sweden AB

(57) **Abstract**

The present disclosure provides a prilling tower comprising a vertical body, a spraying device for forming droplets from a molten composition, one or more air inlets for drawing outside air into the prilling tower, one or more air outlets, wherein the prilling tower comprises one or more water sprayers for spraying water droplets into the outside air drawn in the prilling tower via the one or more air inlets, wherein the one or more water sprayers are configured to be activated when the relative humidity of outside air decreases below a critical value.

## Description

### Field of the disclosure

The present disclosure is related to the field of fertilizer production, in particular in a prilling tower. The present disclosure is also related to a method for producing particles using such a prilling tower.

### Background information

A prilling tower is a tall device (some are more than 100 meter-high) for the production of prills, in particular fertilizer prills. Prilling towers contain a spraying device, such as a prilling bucket, at the top of the tower for spraying small droplets of a molten composition. The droplets fall by gravity to the bottom of the tower. During the fall, the droplets cool down in contact with a counter-current of outside air and solidify into prills.

However, it has been observed that meteorological conditions could impact negatively on the prill quality, and there is a need to develop a new prilling tower that can produce high quality prills independently of the local weather conditions.

### Summary of the disclosure

In a first aspect, the present disclosure provides a prilling tower comprising a vertical body, a spraying device for forming droplets from a molten composition, one or more air inlets for drawing outside air into the prilling tower, one or more air outlets, and one or more water sprayers for spraying water droplets into the outside air drawn in by the one or more air inlets, wherein the one or more water sprayers are configured to be activated when the relative humidity of outside air decreases below a critical value.

In second aspect, the present disclosure provides a method for producing particles using the prilling tower according to the first aspect, the method comprising the steps of:
a) creating an air flow from the one or more air inlets to the one or more air outlets;
b) forming droplets from a molten composition with the spraying device;
c) measuring the relative humidity of the outside air;
d) spraying water with the one or more water sprayers when the relative humidity measured in step c) falls below a critical value; and
e) removing from the prilling tower the prills formed by the droplets.

### Brief description of the figures

The following description of the figure of a specific embodiment of a system according to the present disclosure is only given by way of example and is not intended to limit the present explanation, its application or use. In the figure, identical reference numerals refer to the same or similar parts and features.

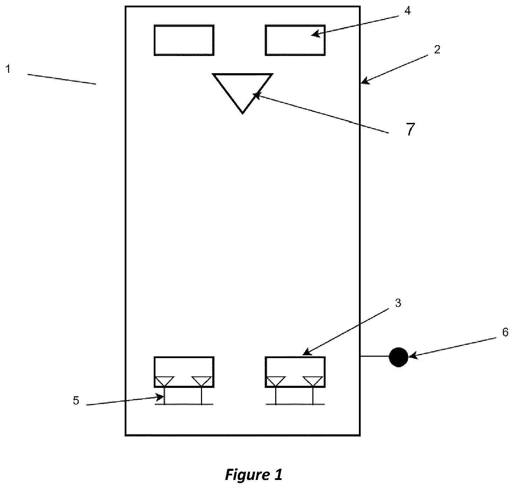

Figure 1 shows a prilling tower according to an embodiment of the present disclosure.

### Detailed description of the disclosure

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "an inlet" refers to one or more than one inlet.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

In a first aspect, the present disclosure provides a prilling tower comprising:
- a vertical body;
- a spraying device for forming droplets from a molten composition;
- one or more air inlets for drawing outside air into the prilling tower;
- one or more air outlets; and
- one or more water sprayers for spraying water droplets into the outside air drawn in by the one or more air inlets, wherein the one or more water sprayers are configured to be activated when the relative humidity of outside air decreases below a critical value.

A conventional prilling tower comprises a vertical body, a spraying device for forming droplets from a molten composition, one or more air inlets for drawing outside air into the prilling tower, and one or more air outlets.

As used herein, the term "outside air" refers to the air outside the prilling tower. Outside air may also be called outdoor air.

The spraying device is located at the top of the prilling tower to maximize the distance travelled by the droplets, and thus maximize the cooling effect of the air onto the droplets. The one or more air inlets and the one or more air outlets create an air flow inside the prilling tower from the bottom to the top of the prilling tower. The air and the droplets flow in opposite direction to maximize the cooling effect of the air flow. The air inlets may comprise means for adjusting the air flow flowing through the air inlets, such as a screen, a blind, or louvers. The air outlets may comprise means for adjusting the air flow flowing through the air outlets, such as a screen, a blind or louvers.

An important parameter of the prills produced by a prilling tower is their crushing strength. Once the prills are produced, they go through several operations such as collecting, bagging, storing, and transport before reaching the final customers, farmers. If the prills have a low crushing strength, all these operations weaken the prills, generate dust, and eventually transform the prills into powder. This is highly undesirable because prills are much easier to distribute for farmers, and powders have a higher surface area leading to higher moisture uptake, which further weakens the prills. Prills of low crushing strength can also be refused by the customers and have to be recycled in the production plant leading to financial losses for the producer.

The crushing strength of particles can be measured using standard techniques known to the skilled person. For example, one suitable method is to place a particle on a support and apply an increasing force to the particle with a device until it breaks. The force applied by the device when the particle breaks is the crushing strength of the prill.

The characteristics of the air flow flowing into the prilling tower is mostly dependent on the weather conditions at the production plant, and the temperature and relative humidity of the air may vary greatly within a few days. For example, in Barbal, Uttar Pradesh, India, it was observed that relative humidity could vary from 11 to 38 within 10 days.

By daily monitoring the relative humidity at a urea-producing plant and the quality of the prills produced, it was observed that the crushing strength of the prills decreased significantly when the relative humidity of the air entering the prilling tower was below 20.

For urea prills comprising at least 95 weight% of urea and produced in Babrala, Uttar Pradesh, India, a crushing strength of at least 18.5 kg.cm⁻² is considered satisfactory. However, for some prills produced when the relative humidity of the air was below 20, a crushing strength as low as 13 kg.cm⁻² was measured.

To solve this problem, it was found that it is possible to install water sprayers inside the prilling tower near the one or more air inlets. The water sprayers are configured to spray water droplets into the outside air drawn into the prilling tower by the one or more air inlets, and they are configured to be activated when the relative humidity of outside air decreases below a critical value.

By spraying water droplets into the air flow entering the prilling tower, the relative humidity of the air flow increases, and the crushing strength of the prills increases.

In some embodiments, the prilling tower comprises more than one air inlet and at least one water sprayer for each air inlet. Prilling towers can be very large, up to at least 100 m high, and at least 20 m in diameter, and with a very high production day, at least 3 000 metric tons of urea prills per day. A single air inlet may not be enough to generate a sufficient air flow for cooling all the prills. So, the prilling tower may comprise more than one air inlet. To ensure that the relative humidity of the air inside the prilling tower is relatively uniform across a cross-section of the prilling tower, it may be an advantage that each air inlet comprises at least one water sprayer configured to spray water droplets into the air flow coming into the prilling tower via the air inlet. Depending on the size of the air inlets and the spraying capacity of a water sprayer, the prilling tower may comprise more than one water sprayer for each air inlet.

In some embodiments, the one or more water sprayers are located inside the prilling tower. It may be an advantage for the water sprayers to be located inside the prilling tower. This way ensures that all the water sprayed by the water sprayers is captured by the air flow flowing to the air outlets.

In some embodiments, the prilling tower comprises one or more air fans for drawing air into the prilling tower. To create an air flow inside the prilling tower, some towers rely on the natural draft created by the air inlets and air outlets. But some towers may comprise one or more air fans to help create the draft and/or increase the natural draft.

In some embodiments, the one or more air outlets are located above the spraying device. The one or more air outlets may be located near the top of the prilling tower to maximize the air flow inside the prilling tower, and the cooling effect of the air flow.

In some embodiments, the one or more air inlets are located at a height on the prilling tower which is at most 20%, or at most 10%, of the total height of the prilling tower. The one or more air inlets are often located near the bottom of the prilling tower to maximize the air flow inside the prilling tower, and the cooling effect of the air flow.

In some embodiments, the spraying device is a prilling bucket. A prilling bucket is a device, often with a conical design, that comprises a plurality of through-holes in its walls. The interior of the prilling bucket is continuously fed with a molten composition, and the prilling bucket is continuously rotating. The rotation directs the melt towards the walls of the bucket, and pushes the melt through the through-holes, thereby creating droplets of the melt.

In some embodiments, the one or more water sprayers are configured to be able to increase the relative humidity of the outside air drawn in the prilling tower to at least 20. For a urea plant located in India and producing prills comprising at least 98 weight% of urea, it was found that the critical value of relative humidity to obtain prills with a satisfactory crushing strength was around 20.

The critical value for each plant and each product may depend on a number of factors, such as the size of the tower, the composition of the prilled product, and the production rate of the plant. The critical value for each product and plant can be found via a series of experiments and observations.

In some embodiments, the one or more water sprayers are connected to a water source. The water source may vary depending on the local conditions of the plant and the different water sources available. In some embodiments, the water source is a stream of process condensate. Process condensate refers to a water stream produced by a plant, in particular a urea-producing plant, by condensing a gas stream comprising water vapor. It may be an advantage that the water source connected to the one or more water sprayers produce water with a very low amount of impurities, as any impurity comprised in the water source may pollute the prills and/or the gas stream leaving the prilling tower.

In some embodiments, the prilling tower comprises a means for measuring the relative humidity of the outside air. To facilitate the operation of the prilling tower and be able to react quickly to the change in weather conditions, it may be an advantage that the prilling tower comprises a means for measuring the relative humidity of the outside air. This ensures that the operators of the prilling tower can quickly react to a change in relative humidity and activate the water sprayers as soon as the relative humidity falls below a critical value. The skilled person is aware of several ways of measuring the relative humidity of air. For example, the relative humidity of air, such as air outside a prilling tower, may be measured using a combination of a wet bulb thermometer and a dry bulb thermometer. By reading the temperature indicated by these two thermometers, it is possible to calculate the relative humidity of the air.

In a second aspect, the present disclosure provides a method for producing particles using the prilling tower according to the first aspect, the method comprising the steps of:
a) creating an air flow of outside air from the one or more air inlets to the one or more air outlets;
b) forming droplets from a molten composition with the spraying device;
c) measuring the relative humidity of the outside air;
d) spraying water with the one or more water sprayers when the relative humidity measured in step c) falls below a critical value; and
e) removing from the prilling tower the prills formed by the droplets.

Step a) of the method is creating an air flow from the one or more air inlets to the one or more air outlets. The air flow may be a natural draft. The velocity and flow of a natural air draft may be dependent on a number of factors, such as height difference between the one or more air inlets and the one or more air outlets, the combined surface of the air inlets, and the combined surface of the air outlets. The air flow may also be created or increased using mechanical means comprised in the prilling tower, such as an air pump, or a fan. The air flow is required to cool the molten droplets.

In some embodiments, the velocity of the air flow is at least 500 000 m³/h, or at least 900 000 m³/h.

Step b) of the method is forming droplets from a molten composition with the spraying device of the prilling tower. The droplets may be created by pushing or forcing a molten composition through a surface comprising through-holes, such as a prilling bucket or a spraying head. The size of the droplets is directly dependent of the through-holes.

In some embodiments, the molten composition is a urea melt comprising at least 95 weight% of urea.

Step c) of the method is measuring the relative humidity of the outside air. Step c) may be performed continuously during the production. It may be performed before step a) and/or step b). Measuring the relative humidity of air, such as outside air, is a well-known task for the skilled person. Different systems are available to perform such task. For example, it is possible to measure the relative humidity of air using a combination of a wet bulb thermometer and a dry bulb thermometer.

Step d) of the method is spraying water with the one or more water sprayers when the relative humidity measured in step c) falls below a critical value. In order to obtain good quality prills, it is important to maintain the relative humidity inside the prilling tower above a particular critical value. The critical value may depend on the product that is produced in the prilling tower and/or the location of the prilling tower. For example, a plant producing prills containing at least 98 weight% of urea in Uttar Pradesh, India, the critical value of relative humidity was found to from 18 to 25, from 18 to 22, or 20.

Step e) of the method is removing from the prilling tower the prills formed by the droplets. Once the prills fall at the bottom of the prilling tower, they are moved to be further processed and stored. When the prills fall on the bottom of the prilling tower, they may be only partially solid. For example, the core of the prills may still be partially liquid.

An example of further processing is a coating step. In some embodiments, the method comprises the step of applying a coating agent to the prills removed from the prilling tower. The urea prills may be coated with a coating agent to improve some properties of the prills. For example, urea prills may be coated with neem oil. In some embodiments, the coating agent is neem oil. In some embodiments, the method comprises the step of coating the prills removed from the tower in step e) with at least 200 ppm of neem oil, with from 200 to 500 ppm of neem oil, with from 300 to 500 ppm of neem oil, or with from 300 to 400 ppm of neem oil.

In some embodiments, the molten composition used in step b) comprises at least 90 weight% of urea.

In some embodiments, the molten composition used in step b) comprises at least 90 weight%, at least 95 weight%, at least 98 weight%, from 95 to 99.9 weight%, from 95 to 99 weight%, or from 98 to 99.5 weight% of urea.

In some embodiments, the critical value of relative humidity is 20.

Figure 1 shows the inside of a prilling tower 1 according to an embodiment of the present disclosure. The prilling tower **1** comprises a vertical, cylindrical body **2,** air outlets **4** located at the top of the prilling tower **1,** and air inlets **3** located at the bottom of the prilling tower **1.** The prilling tower **1** also comprises a prilling bucket **7** for spraying a urea melt and create droplets. A means **6** for measuring the relative humidity of outside air is attached to the outside wall of the prilling tower **1.** The prilling tower **1** comprises water sprayers **5** located inside the prilling tower **1** and directly in front of the air inlets **3.**

### Example

In a urea-producing plant in Babrala, Uttar Pradesh, India, producing urea prills in a prilling tower, several samples of urea prills were taken in April and May 2021. The relative humidity of the atmosphere at the time of sampling was noted and the crushing strength of the prills was measured using a single particle load technique, wherein an increasing load is applied to a particle at a time (see Table 1). The crushing strength is measured for several prills, and the average of the data obtained is given in the table below. The crushing strength is expressed in kg.cm⁻².

| **Sample** | **Crushing Strength** | **Relative humidity** |
|---|---|---|
| 1 | 14 | 10.5 |
| 2 | 16 | 13.5 |
| 3 | 22 | 28 |
| 4 | 21.5 | 30.2 |
| 5 | 20.5 | 27 |
| 6 | 17.5 | 14 |
| 7 | 18.5 | 36.5 |

After that, 20 spray nozzles were installed inside the prilling tower next to the air inlets at the bottom of the prilling tower. The spray nozzles are activated when a combination of dry bulb and wet bulb thermometers indicates a relative humidity outside the prilling tower below 20. The crushing strength of the particles has consistently been measured to over 18.5 kg.cm⁻² since.

The person skilled in the art realizes that the present invention by no means is limited to the embodiments described above. On the contrary, many modifications and variations are possible within the scope of the appended claims.

## Claims

1. A prilling tower (1) comprising:
- a vertical body (2);
- a spraying device (7) for forming droplets from a molten composition;
- one or more air inlets (3) for drawing outside air into the prilling tower;
- one or more air outlets (4);
**characterized in that** the prilling tower (1) comprises one or more water sprayers (5) for spraying water droplets into the outside air drawn in the prilling tower (1) via the one or more air inlets (3), wherein the one or more water sprayers (5) are configured to be activated when the relative humidity of the outside air decreases below a critical value.

2. The prilling tower (1) according to claim 1, wherein the prilling tower (1) comprises more than one air inlet (3) and at least one water sprayer (5) for each air inlet (3).

3. The prilling tower (1) according to claim 1 or 2, wherein the one or more water sprayers (5) are located inside the prilling tower (1).

4. The prilling tower (1) according to any one of claims 1 to 3, wherein the prilling tower (1) comprises one or more air fans for drawing air into the prilling tower (1).

5. The prilling tower (1) according to any one of claims 1 to 4, wherein the spraying device (7) is a prilling bucket.

6. The prilling tower (1) according to any one of claims 1 to 5, wherein the one or more water sprayers (5) are configured to be able to increase the relative humidity of the outside air drawn into the prilling tower (1) to at least 20.

7. The prilling tower (1) according to any one of claims 1 to 6, wherein the one or more water sprayers (5) are connected to a water source.

8. The prilling tower (1) according to any one of claims 1 to 7, wherein the prilling tower (1) further comprises a means (6) for measuring the relative humidity of the outside air.

9. The prilling tower (1) according to claim 8, wherein the means (6) for measuring the relative humidity of the outside air comprises a dry bulb thermometer and a wet bulb thermometer.

10. A method for producing particles using the prilling tower (1) according to any one of claims 1 to 9, the method comprising the steps of:
a) creating an air flow of outside air from the one or more air inlets (3) to the one or more air outlets (4);
b) forming droplets from a molten composition with the spraying device (7);
c) measuring the relative humidity of the outside air;
d) spraying water on the air flow with the one or more water sprayers (5) when the relative humidity measured in step c) falls below a critical value; and
e) removing from the prilling tower (1) the prills formed by the droplets.

11. The method according to claim 10, wherein the molten composition used in step b) comprises at least 90 weight%, at least 95 weight%, at least 98 weight%, from 95 to 99.9 weight%, from 95 to 99 weight%, or from 98 to 99.5 weight% of urea.

12. The method according to claim 10 or 11, wherein the critical value of relative humidity is 20.

13. The method according to any one of claims 10 to 12, wherein the method further comprises the step of: f) applying a coating agent to the prills removed from the prilling tower (1) in step e).

14. The method according to claim 13, wherein the coating agent is neem oil.
